(19) Europäisches Patentamt
European Patent Office
Office européen des brevets

(11) EP 1 525 234 B1

(12) # EUROPÄISCHE PATENTSCHRIFT

(45) Veröffentlichungstag und Bekanntmachung des Hinweises auf die Patenterteilung:
**29.08.2007 Patentblatt 2007/35**

(21) Anmeldenummer: **03763638.8**

(22) Anmeldetag: **13.06.2003**

(51) Int Cl.:
***C08F 22/10*** *(2006.01)* ***G02B 1/04*** *(2006.01)*
***C07C 323/12*** *(2006.01)*

(86) Internationale Anmeldenummer:
**PCT/EP2003/006271**

(87) Internationale Veröffentlichungsnummer:
**WO 2004/007575 (22.01.2004 Gazette 2004/04)**

(54) **VERFAHREN ZUR HERSTELLUNG HOCHTRANSPARENTER KUNSTSTOFFE FUR OPTISCHE MATERIALIEN**

METHOD FOR PRODUCING HIGHLY TRANSPARENT PLASTICS FOR OPTICAL MATERIALS

PROCEDE DE PRODUCTION DE MATIERES PLASTIQUES HAUTEMENT TRANSPARENTES POUR MATERIAUX OPTIQUES

(84) Benannte Vertragsstaaten:
**AT BE BG CH CY CZ DE DK EE ES FI FR GB GR HU IE IT LI LU MC NL PT RO SE SI SK TR**

(30) Priorität: **12.07.2002 DE 10231869**
**10.04.2003 DE 10316671**

(43) Veröffentlichungstag der Anmeldung:
**27.04.2005 Patentblatt 2005/17**

(73) Patentinhaber: **Röhm GmbH**
**64293 Darmstadt (DE)**

(72) Erfinder:
- **SCHMITT, Bardo**
**55120 Mainz (DE)**
- **KNEBEL, Joachim**
**64665 Alsbach-Hähnlein (DE)**
- **HARTMANN, Patrik**
**64572 Büttelborn (DE)**

(56) Entgegenhaltungen:
**EP-A- 0 592 935** **EP-A- 0 810 210**
**WO-A-96/38486**

EP 1 525 234 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung transparenter Kunststoffe, Insbesondere bezieht sich die Erfindung auf hochtransparente Kunststoffe, die zur Herstellung von optischen, vor allem ophthalmischen Linsen verwendet werden können.

Brillen sind heutzutage aus dem Alltag nicht mehr wegzudenken. Dabei haben insbesondere Brillen mit Kunststoffgläsern in letzter Zeit an Bedeutung gewonnen, weil sie leichter und weniger zerbrechlich als Brillengläser aus anorganischen Materialien sind und mittels geeigneter Farbstoffe gefärbt werden können. Zur Herstellung von Kunststoff-Brillengläsern werden im allgemeinen hochtransparente Kunststoffe eingesetzt, die beispielsweise ausgehend von Diethylenglykol-bis(allylcarbonat) (DAC), Thiourethan-Verbindungen mit $\alpha,\omega$-terminierten Mehrfachbindungen oder Schwefel-haltigen (Meth)acrylaten erhältlich sind.

DAC-Kunststoff weist eine sehr gute Schlagzähigkeit, Transparenz und eine gute Verarbeitbarkeit auf. Nachteilig ist jedoch, dass aufgrund des relativ geringen Brechungsindex $n_D$ von ca. 1,50 sowohl das Zentrum als auch die Ränder der betreffenden Kunststoffgläser verstärkt werden müssen, so dass die Brillengläser dementsprechend dick und schwer sind. Der Tragekomfort von Brillen mit DAC-Kunststoffgläsern ist daher deutlich gemindert:

Thiourethan-Prepolymere mit $\alpha,\omega$-terminierten Mehrfachbindungen, die durch Umsetzung von $\alpha,\omega$-difunktionellen Thiourethan-Prepolymeren, die zwei Isocyanatgruppen tragen, mit ungesättigten Verbindungen, die zerewitinowaktive H-Atome besitzen, erhalten werden, werden beispielsweise in DD 298645 beschrieben. Als Anwendungsmöglichkeiten der Thiourethan-Prepolymere werden transparente Schichten oder gut haftende Filme genannt. Eine Verwendung als optische und ophthalmische Linsen wird in DD 298645 nicht offenbart.

Die in JP 5-215995 beschriebenen kunststoff-Brillengläser werden durch radikalische Copolymerisation einer ternären Zusammensetzung aus einer $\alpha,\omega$-Di(meth)acrilat-teminierten Thiourethan-Verbindung, die S-(Phenyl-S)$_2$-Einheiten aufweist, Trimethylolpropantris(beta-thiopropionat) und Divinylbenzol erhalten. Obwohl der Brechungsindex der resultierenden Kunststoffe relativ groß ist ($n_D \geq 1,58$), haben die Gläser den Nachteil einer vergleichsweise niedrigen Abbeschen-Zahl im Bereich von 28 bis 36. Eine zu niedrige Abbesche-Zahl führt zu einer höheren Dispersion und zu Farbrändern, entsprechende Kunststoff-Gläser sind daher als Sehhilfe nur bedingt geeignet. Über die Schlagzähigkeit der Kunststoffgläser sowie über ihre Vicat-Temperatur wird in JP 5-215995 nichts ausgesagt.

Entsprechendes gilt auch für die in der Druckschrift WO 01/36506 offenbarten Kunststoffe, die durch radikalisch Polymerisation von Monomeren mit mindestens zwei (Meth)acryloylgruppen erhalten werden, wobei die Monomere weiterhin Thiourethan- und/oder Dithiourethanverknüpfungen innerhalb des Moleküls aufweisen. Das exemplarisch angeführte Polymer weist einen Brechungsindex von 1,60 und eine Abbe-Zahl von 34 bis 35 auf. Angaben zur Vicat-Temperatur der Kunststoffe können auch dieser Druckschrift nicht entnommen werden.

Eine weitere Gruppe von transparenten Kunststoffen für optische Anwendungen wird in EP 0810210 offenbart. Dabei leiten sich die eingesetzten Schwefelenthaltenden (Meth)acrylat-Monomere im Gegensatz zu den vorstehend beschriebenen Verbindungen formal nicht von den Hydroxyalkyl(meth)acrylaten, sondern von den Mercaptoalkyl(meth) acrylaten ab. Die in EP 0810210 beschriebenen Kunststoffe weisen eine verbesserte Schlagzähigkeit und einen hohen Brechungsindex $n_D$ im Bereich von 1,589 bis 1,637 auf. Die Abbesche-Zahl ist im Vergleich mit den in JP 5-215995 beschriebenen Kunststoffen nur leicht erhöht, sie liegt zwischen 27,5 und 40,7. Daher sind auch die in EP 0810210 offenbarten Kunststoffe für Brillengläser nur bedingt geeignet. Angaben zur Vicat-Temperatur der Kunststoffe können auch dieser Druckschrift nicht entnommen werden.

Die Druckschrift DE 4234251 offenbart schwefelhaltige Polymethacrylate, welche durch radikalische Copolymerisation einer Monomermischung aus Verbindungen der Formel (1) und (2) erhalten werden.

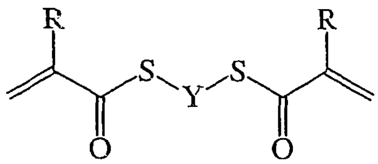

(1)

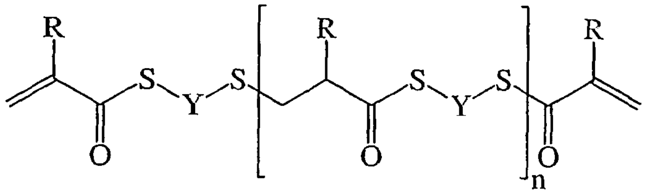

(2)

,

Dabei bezeichnet Y einen gegebenenfalls verzweigten, gegebenenfalls cyclischen Alkylrest mit 2 bis 12 Kohlenstoffatomen oder einen Arylrest mit 6 bis 14 Kohlenstoffatomen oder einen Alkarylrest mit 7 bis 20 Kohlenstoffatomen, wobei die Kohlenstoffketten durch eine oder mehrere Ether oder Thioethergruppen unterbrochen sein können. R steht für Wasserstoff oder Methyl und n ist eine ganze Zahl im Bereich von 1 bis 6.

Gemäß DE 4234251 stehen die Monomere der Formel (1) und (2) im allgemeinen im molaren Verhältnis von 1:0,5 bis 0,5:1. Die Herstellung der Monomermischung erfolgt durch Umsetzung von mindestens zwei Molen (Meth) acrylsäurechlorid oder (Meth)acrylsäureanhydrid mit einem Mol eines Dithiols, wobei man das (Meth)acrylsäurechlorid oder (Meth)acrylsäureanhydrid in einem inerten, organischen Lösungsmittel und das Dithiol in wäßrigalkalischer Lösung zur Reaktion bringt. Als geeignete Lösungsmittel werden Methyl-tert.butylether, Toluol und Xylol genannt, deren Dielektrizitätskonstante bei 20°C 2,6, 2,4 bzw. 2,3 bis 2,6 ist.

Die in DE 4234251 beschriebenen Kunststoffe sind farblos, hart und leicht spröde und weisen einen hohen Brechungsindex $n_D$ im Bereich von 1,602 bis 1,608 auf. Die Abbesche-Zahl liegt zwischen 35 und 38. Daher sind auch diese Kunststoffe für Brillengläser nur bedingt geeignet. Angaben zur Vicat-Temperatur der Kunststoffe können auch dieser Druckschrift nicht entnommen werden.

In Anbetracht des Standes der Technik war es nun Aufgabe der vorliegenden Erfindung, ein Verfahren zur Herstellung eines hochtransparenten Kunststoffs mit möglichst hohem Brechungsindex, vorzugsweise größer 1,608, und möglichst hoher Abbeschen-Zahl, vorzugsweise größer 36 zur Verfügung zu stellen, der die Herstellung von optischen Linsen ermöglicht. Insbesondere sollen Kunststoff-Brillengläser herstellbar sein, die eine niedrige Dispersion und keine Farbränder aufweisen.

Eine weitere Aufgabe bestand darin, ein Verfahren zur Herstellung eines hochtransparenten Kunststoffs mit verbesserten mechanischen Eigenschaften, wie einer guten Schlagzähigkeit, anzugeben. Vorzugsweise sollte die Schlagzähigkeit nach Charpy des Kunststoffes gemessen nach ISO 179/1fU größer 3,0 kJ/msein.

Der vorliegenden Erfindung lag auch die Aufgabe zugrunde, ein Verfahren zur Herstellung eines hochtransparenten Kunststoffs mit verbesserten mechanischen Eigenschaften auch bei erhöhten Temperaturen zugänglich zu machen. Insbesondere sollte der erfindungsgemäße Kunststoff eine möglichst hohe Vicat-Temperatur, vorzugsweise größer 50,0°C gemessen nach ISO 306, aufweisen.

Eine Aufgabe der vorliegenden Erfindung war auch darin zu erblicken, dass der nach dem erfindungsgemäßen Verfahren herstellbare hochtransparente Kunststoff auf einfache Art und Weise im industriellen Maßstab und kostengünstig herstellbar ist. Insbesondere sollte er ausgehend von mindestens einem bei Normaldruck und Temperaturen im Bereich von 20,0°C bis 80,0°C fließfähigen Monomer via freie radikalische Polymerisation erhältlich sein.

Der vorliegenden Erfindung lag auch die Aufgabe zugrunde, Anwendungsgebiete und Verwendungsmöglichkeiten des nach dem erfindungsgemäßen Verfahren herstellbaren hochtransparenten Kunststoffes anzugeben.

Gelöst werden diese sowie weitere nicht explizit genannte Aufgaben, die jedoch aus den hierin einleitend diskutierten Zusammenhängen ohne weiteres ableitbar oder erschließbar sind, durch ein Verfahren zur Herstellung eines hochtransparenten Kunststoffs mit allen Merkmalen des Patentanspruchs 1. Zweckmäßige Abwandlungen des Verfahrens zur Herstellung des Kunststoffes werden in den auf Anspruch 1 rückbezogenen Unteransprüchen unter Schutz gestellt. Der Anspruch der Verwendungskategorie schützt eine bevorzugte Verwendung des durch das erfindungsgemäße Verfahren herstellbaren hochtransparenten Kunststoffs. Eine optische, vorzugsweise ophthalmische Linse, die den erfindungsgemäßen hochtransparenten Kunststoff aufweist, wird in einem weiteren Produktanspruch beschrieben. Dadurch, dass man ein Verfahren zur Herstellung eines hochtransparenten Kunststoffs bereitstellt, der durch freie radikalische Polymerisation einer Mischung enthaltend Verbindungen der Formel (I) und (II) erhältlich ist.

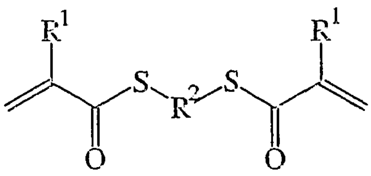

(I)

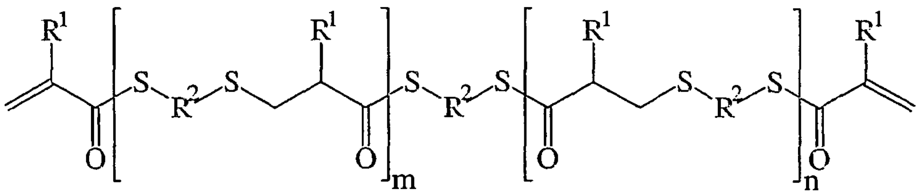

(II)

,

worin $R^1$ jeweils unabhängig voneinander Wasserstoff oder einen Methylrest, $R^2$ jeweils unabhängig voneinander einen linearen oder verzweigten, aliphatischen oder cycloaliphatischen Rest oder einen substituierten oder unsubstituierten aromatischen oder heteroaromatischen Rest und

m und n jeweils unabhängig voneinander eine ganze Zahl größer gleich 0 mit $m + n > 0$ bedeuten,

und welches sich dadurch auszeichnet, dass der hochtransparente Kunststoff aus einer Mischung erhältlich ist, die mehr als 10 mol-%, bezogen auf die Gesamtmenge der Verbindungen der Formel (I) und (II), Verbindungen der Formel (II) mit m+n=2 enthält. Es gelingt auf nicht ohne weiteres vorhersehbare Weise, durch das Verfahren einen hochtransparenten Kunststoff zugänglich zu machen, der für optische, insbesondere ophthalmische, Linsen hervorragend geeignet ist. Der erfindungsgemäße hochtransparente Kunststoff weist eine bisher unbekannte Kombination herausragender Eigenschaften, wie einen hohen Brechungsindex, eine hohe Abbesche-Zahl, eine gute Schlagzähigkeit nach Charpy sowie eine hohe Vicat-Temperatur auf. Die entsprechenden Kunststoff-Brillengläser zeigen eine niedrige Dispersion; Farbränder sind nicht zu beobachten.

Zugleich besitzt der durch das erfindungsgemäße Verfahren erhältliche hochtransparente Kunststoff weitere Vorteile. Hierzu gehören unter anderem:

⇒ Aufgrund des hohen Brechungsindex des durch das Verfahren erhältlichen erfindungsgemäßen Kunststoff ist eine Verstärkung und somit Verdickung des Zentrums und der Ränder von entsprechenden Kunststoff-Brillengläsern nicht erforderlich, der Tragekomfort derartiger Brillen ist wegen des vergleichsweise geringen Gewichts deutlich erhöht.

⇒ Die gute Schlagzähigkeit des durch das Verfahren erhältlichen erfindungsgemäßen Kunststoffes schützt die entsprechenden Kunststoff-Brillengläser vor den "Gefahren des Alltaps". Eine Beschädigung bzw. irreparable Zerstörung, insbesondere der dünnen Brillengläser durch mechanische Gewalteinwirkung wird größtenteils verhindert.

⇒ Der erfindungsgemäße hochtransparente Kunststoff weist eine hohe Vicat-Temperatur gemäß ISO 306, vorzugsweise größer 50,0°C, auf und behält daher bis zu dieser Temperatur seine hervorragenden mechanischen Eigenschaften, insbesondere die gute Schlagfestigkeit und seine Härte.

⇒ Der durch das erfindungsgemäße Verfahren erhältliche hochtransparente Kunststoff ist durch freie radikalische Copolymerisation einer bei Normaldruck und Temperaturen im Bereich von 20,0°C bis 80,0°C vorzugsweise fließfähigen Monomermischung auf einfache Art und Weise im industriellen Maßstab und kostengünstig herstellbar.

⇒ Die Herstellung der zugrundeliegenden Monomermischung ist ebenfalls auf einfache Art und Weise im industriellen Maßstab und kostengünstig möglich.

Die vorliegende Erfindung bezieht sich auf ein Verfahren zur Herstellung eines hochtransparenten Kunststoffs.

Vorzugsweise besitzt der erfindungsgemäße Kunststoff gemäß DIN 5036 eine Transmission von mindestens 89,0 %.

Der durch das erfindungsgemäße Verfahren erhältliche hochtransparente Kunststoff ist durch freie radikalische Copolymerisation einer bei Normaldruck und Temperaturen im Bereich von 20,0°C bis 80,0°C vorzugsweise fließfähigen Monomermischung erhältlich. Die freie radikalische Copolymerisation ist ein weithin bekanntes durch freie Radikale initiiertes Verfahren, bei welchem man eine Mischung niedermolekularer Monomere in hochmolekulare Verbindungen, sogenannte Polymere, überführt. Für weitere Einzelheiten wird auf die Offenbarung von H. G. Elias, Makromoleküle, Band 1 und 2, Basel, Heidelberg, New York Hüthig und Wepf. 1990 und Ullmann's Encyclopedia of Industrial Chemistry, 5. Aufl., Stichwort "Polymerization Processes" verwiesen.

In einer bevorzugten Ausführungsform der vorliegenden Erfindung ist der erfindungsgemäße Kunststoff durch Masse- oder Substanzpolymerisation der Monomermischung erhältlich. Dabei wird unter der Masse- oder Substanzpolymerisation ein Polymerisationsverfahren verstanden, bei dem Monomere ohne Lösungsmittel polymerisiert werden, so dass die Polymerisationsreaktion in Masse oder in Substanz vonstatten geht. Im Gegensatz dazu ist die Polymerisation in Emulsion (sogenannte Emulsionspolymerisation) und die Polymerisation in der Dispersion (sogenannte Suspensionspolymerisation) zu sehen, bei der die organischen Monomere mit Schutzkolloiden und/oder Stabilisatoren in wässriger Phase suspendiert werden und mehr oder weniger grobe Polymerisatteilchen gebildet werden. Eine besondere Form der Polymerisation in heterogener Phase ist die Perlpolymerisation, die im wesentlichen zur Suspensionspolymerisation zu rechnen ist.

Die Polymerisationsreaktion kann grundsätzlich auf jede dem Fachmann geläufige Weise ausgelöst werden, beispielsweise unter Verwendung eines Radikalinitiators (z. B. Peroxid, Azoverbindung) oder durch Bestrahlen mit UV-Strahlen, sichtbarem Licht, $\alpha$- Strahlen, $\beta$-Strahlen oder $\gamma$-Strahlen, oder eine Kombination derselben eingeleitet werden.

In einer bevorzugten Ausführungsform der vorliegenden Erfindung werden zur Initiierung der Polymerisation lipophile radikalische Polymerisationsinitiatoren verwendet. Die radikalischen Polymerisationsinitiatoren sind insbesondere deswegen lipophil, damit sie sich in der Mischung der Substanzpolymerisation lösen. Zu einsetzbaren Verbindungen gehören neben den klassischen Azoinitiatoren, wie Azoisobuttersäurenitril (AIBN) bzw. 1,1-Azobiscyclohexancarbonitril, u. a. aliphatische Peroxyverbindungen, wie z. B. tert.-Amylperoxyneodecanoat, tert.-Amylperoxypivalat, tert.-Butylperoxypivalat, tert.-Amylperoxy-2-ethylhexanoat, tert.-Butylperoxy-2-ethylhexanoat, tert.-Amylperoxy-3,5,5,-trimethylhexanoat, Ethyl-3,3-di-(tert.-amylperoxy)-butyrate, tert.-Butylperbenzoat, tert.-Butylhydroperoxid, Decanoylperoxid, Laurylperoxid, Benzoylperoxid und beliebige Mischungen der genannten Verbindungen. Von den vorgenannten Verbindungen ist AIBN ganz besonders bevorzugt.

In einer weiteren bevorzugten Ausführungsform der vorliegenden Erfindung erfolgt die Einleitung der Polymerisation unter Verwendung bekannter Photoinitiatoren durch Bestrahlen mit UV-Strahlen oder dergleichen. Hier können die gängigen, kommerziell erhältlichen Verbindungen wie z. B. Benzophenon, $\alpha,\alpha$-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere zum Einsatz Kommen, wobei die genannten Photoinitiatoren allein oder in Kombination von zwei oder mehreren oder in Kombination mit einem der obigen Polymerisationsinitiatoren benutzt werden können.

Die Menge der Radikalbildner kann in weiten Bereichen variieren. Bevorzugt kommen beispielsweise Mengen im Bereich von 0,1 bis 5,0 Gew.-%, bezogen auf das Gewicht der Gesamtzusammensetzung zum Einsatz. Besonders bevorzugt werden Mengen im Bereich von 0,1 bis 2,0 Gew.-%, insbesondere Mengen im Bereich von 0,1 bis 0,5 Gew.-%, jeweils bezogen auf das Gewicht der Gesamtzusammensetzung.

Die für die Polymerisation zu wählende Polymerisationstemperatur ist dem Fachmann offensichtlich. Sie wird in erster Linie durch den gewählten Initiator und die Art und Weise der Initiierung (thermisch, durch Bestrahlung u. a.) bestimmt. Es ist bekannt, dass die Polymerisationstemperatur die Produkteigenschaften eines Polymeren beeinflussen kann. Daher werden im Rahmen der vorliegenden Erfindung Polymerisationstemperaturen im Bereich von 20,0°C bis 100,0°C, zweckmäßigerweise im Bereich von 20,0°C bis 80,0°C, insbesondere im Bereich von 20,0°C bis 60,0°C bevorzugt. In einer besonders bevorzugten Ausführungsform der vorliegenden Erfindung wird die Reaktionstemperatur während der Reaktion, vorzugsweise stufenweise erhöht. Weiterhin hat sich auch ein Tempern bei erhöhter Temperatur, beispielsweise bei 100°C, gegen Ende der Reaktion als zweckmäßig erwiesen.

Die Reaktion kann sowohl bei Unterdruck als auch bei Überdruck stattfinden. Vorzugsweise wird sie aber bei Normaldruck durchgeführt. Die Reaktion kann unter Luft als auch unter Schutzgasatmosphäre stattfinden, wobei vorzugsweise ein möglichst geringer Sauerstoffanteil vorhanden ist, da dieser eine mögliche Polymerisation inhibiert.

In einer besonders bevorzugten Ausführungsform der vorliegenden Erfindung geht man zur Herstellung des erfindungsgemäßen hochtransparenten Kunststoffs so vor, dass man eine homogene Mischung aus den Komponenten Monomermischung Initiator und weiteren Additiven, wie z. B. Gleitmittel herstellt und diese daraufhin zwischen Glasplatten füllt, deren Form durch die spätere Anwendung, z. B. als Linsen, Brillengläser, Prismen oder sonstige, optische Komponenten, vorbestimmt ist. Die Initiierung der Substanzpolymerisation erfolgt durch Energiezufuhr, beispielsweise

durch energiereiche Strahlung, insbesondere mit UV-Licht, oder durch Erwärmen, zweckmäßigerweise im Wasserbad und über mehrere Stunden. Man erhält auf diese Weise das optische Material in seiner gewünschten Form als klaren, transparenten, farblosen, harten Kunststoff.

Im Rahmen der vorliegenden Erfindung bezeichnen Gleitmittel Zusatzstoffe für gefüllte plastische Massen, wie Pressmassen und Spritzgussmassen, um die Füllstoffe leichter gleitend und die Pressmassen damit leichter verformbar zu machen. Hierzu sind beispielsweise Metallseifen und Siloxan-Kombinationen geeignet. Infolge seiner Unlöslichkeit in Kunststoffen wandert ein Teil des Gleitmittels bei der Verarbeitung an die Oberfläche und wirkt als Trennmittel. Besonders geeignete Gleitmittel, wie nicht-ionische fluoroberflächenaktive Mittel, nicht-ionische siliconoberflächenaktive Mittel, quaternäre Alkylammoniumsalze und saure Phosphatester, werden in der EP 271839 A beschrieben, auf deren Offenbarung im Rahmen der vorliegenden Erfindung explizit Bezug genommen wird.

Für die Zwecke der vorliegenden Erfindung ist die Monomermischung für die freie radikalische Polymerisation bei Normaldruck und Temperaturen im Bereich von 20,0°C bis 80,0°C vorzugsweise fließfähig. Der Begriff "fließfähig" ist dem Fachmann bekannt. Er kennzeichnet eine mehr oder weniger viskose Flüssigkeit, die vorzugsweise in verschiedene Formen gegossen und unter Verwendung geeigneter Hilfsmittel gerührt und homogenisiert werden kann. Besondere, fließfähige Massen im Sinne der Erfindung weisen insbesondere bei 25°C und bei Normaldruck (101325 Pa) dynamische Viskositäten in der Größenordnung von 0,1 mPa.s bis 10 Pa.s, zweckmäßigerweise im Bereich von 0,65 mPa.s bis 1 Pa.s, auf. In einer ganz besonders bevorzugten Ausführungsform der vorliegenden Erfindung weist eine gegossene Monomermischung keine Blasen, insbesondere keine Luftblasen auf. Ebenfalls bevorzugt sind solche Monomermischungen, aus denen Blasen, insbesondere Luftblasen, durch geeignete Verfahren, wie beispielsweise Temperaturerhöhung und/oder Anlegen von Vakuum entfernt werden können.

Im Rahmen der vorliegenden Erfindung weist der nach dem Verfahren erhältliche Kunststoff vorzugsweise einen Brechungsindex $n_D$ > 1,608, insbesondere größer 1,61 auf. Der Brechungsindex $n_D$ ist eine dem Fachmann bekannte Größe, die erfindungsgemäß die Ablenkung (Richtungsänderung) charakterisiert, welche ein Lichtstrahl erfährt, wenn er im Winkel aus einem optisch andersartigen Medium, wie beispielsweise Luft, in den erfindungsgemäßen hochtransparenten Kunststoff eintritt, in dem seine Fortpflanzungsgeschwindigkeit (c = Lichtgeschwindigkeit im Vakuum, c/n = Lichtgeschwindigkeit im Medium mit dem Brechungsindex n) differiert. Nach dem bereits von Snellius (1615) aufgestellten Lichtbrechungsgesetz gilt:

$$\frac{\sin\alpha}{\sin\beta} = \frac{n_2}{n_1}$$

Dabei kennzeichnen $n_1$ bzw. $n_2$ die Brechungsindices der beiden Medien 1 und 2, $\alpha$ den Winkel des Lichtstrahles zum Einfallslot im Medium 1 und $\beta$ der entsprechende Winkel im Medium 2.

Der Brechungsindex eines Mediums ist im allgemeinen von der Wellenlänge der einfallenden Strahlung und von der Temperatur abhängig. Die erfindungsgemäßen Angaben des Brechungsindex beziehen sich daher auf die in DIN 53491 spezifizierten Standardangaben (Standardwellenlänge der (gelben) D-Linie des Natriums (ca. 589 nm)).

Erfindungsgemäß weist der nach dem Verfahren erhältliche Kunststoff vorzugsweise eine Abbesche Zahl > 36,0 gemäß DIN 53491 auf. Die Abbesche-Zahl bezeichnet eine von E. Abbe eingeführte Größe $\nu_D$

$$\nu_D = \frac{(n_D - 1)}{(n_F - n_C)}$$

zur Kennzeichnung der Dispersion eines optischen Mediums, wobei $n_D$, $n_F$ und $n_C$ die Brechzahlen des Mediums bei den Fraunhoferschen D-, F- und C-Linien sind. Dabei ist D der Mittelwert der Natrium-D-Linien $\lambda_1$ = 589,6 nm und $\lambda_2$ = 589,0 nm, F die Wasserstoff-Linie mit $\lambda$ = 486,1 nm und C die Wasserstoff-Linie mit $\lambda$ = 656,3 nm. Eine große Abbesche-Zahl bedeutet eine geringe Dispersion. Weitere Informationen zur Abbeschen-Zahl kann der Fachmann der Literatur, beispielsweise dem Lexikon der Physik (Walter Greulich (Hrsg.); Lexikon der Physik; Heidelberg; Spektrum, Akademischer Verlag; Band 1; 1998) entnehmen.

Gemäß einer besonders bevorzugten Ausführungsform der vorliegenden Erfindung weist der Kunststoff eine Abbesche Zahl> 36,0, zweckmäßigerweise > 37,0, insbesondere > 38,0 auf. Dabei haben sich Kunststoffe mit einer

Abbeschen Zahl > 39,0, vorzugsweise > 40,0 als ganz besonders vorteilhaft erwiesen. Erfindungsgemäß von höchstem Interesse sind Kunststoffe mit einer Abbeschen Zahl > 41,0, insbesondere > 42,0.

Im Rahmen der vorliegenden Erfindung ist der hochtransparente Kunststoff aus einer Mischung erhältlich, die Verbindungen der Formel (I) und (II) aufweist

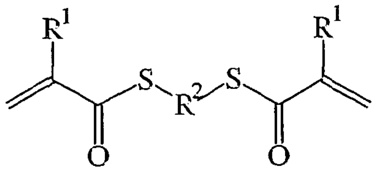

(I)

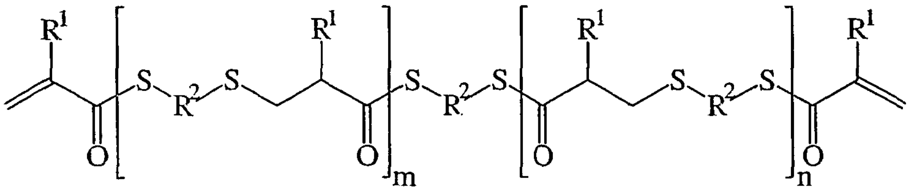

(II)

.

Dabei ist der Rest $R^1$ jeweils unabhängig voneinander Wasserstoff oder ein Methylrest, vorzugsweise ein Methylrest.

Der Rest $R^2$ bezeichnet jeweils unabhängig voneinander einen linearen oder verzweigten, aliphatischen oder cycloaliphatischen Rest oder einen substituierten oder unsubstituierten aromatischen oder heteroaromatischen Rest, wie beispielsweise eine Methylen-, Ethylen-, Propylen-, iso-Propylen-, n-Butylen-, iso-Butylen-, t-Butylen- oder Cyclohexylen-Gruppe, oder zweibindige aromatische oder heteroaromatische Gruppen, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste.

Weiterhin umfasst der Rest $R^2$ auch Reste der Formel

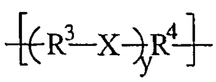

(Ia)

,

wobei $R^3$ jeweils unbhängig voneinander ein linearer oder verzweigter, aliphatischer oder cycloaliphatischer Rest, wie beispielsweise eine Methylen-, Ethylen-, Propylen-, iso-Propylen-, n-Butylen-, iso-Butylen-, t-Butylen- oder Cyclohexylen-Gruppe ist. Der Rest X ist jeweils unabhängig voneinander Sauerstoff oder Schwefel und der Rest $R^4$ steht für einen linearen oder verzweigten, aliphatischen oder cycloaliphatischen Rest, wie beispielsweise eine Methylen-, Ethylen-, Propylen-, iso-Propylen-, n-Butylen-, iso-Butylen-, t-Butylen- oder Cyclohexylen-Gruppe. Dabei umfassen im Rahmen der vorliegenden Erfindung cycloaliphatische Reste auch bi-, tri- und polycyclische aliphatische Reste. y ist eine ganze Zahl zwischen 1 und 10, insbesondere 1, 2, 3 und 4.

Bevorzugte Reste der Formel (Ia) umfassen:

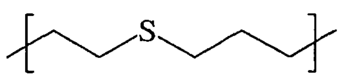

,

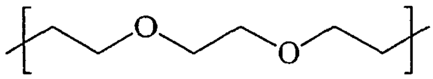

,

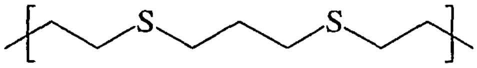

und

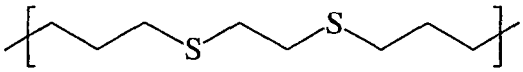

.

Vorzugsweise ist der Rest $R^2$ ein aliphatischer Rest mit 1 bis 10 Kohlenstoffatomen, vorzugsweise ein linearer aliphatischer Rest mit 2 bis 8 Kohlenstoffatomen.

Die Indizes m und n sind jeweils unabhängig voneinander eine ganze Zahl größer gleich 0, beispielsweise 0, 1, 2, 3, 4, 5 oder 6. Dabei ist die Summe m + n größer 0, vorzugsweise im Bereich von 1 bis 6, zweckmäßigerweise im Bereich von 1 bis 4, insbesondere 1, 2 oder 3, ist.

Für die Zwecke der vorliegenden Erfindung ist es erforderlich, dass die Mischung mehr als 10 mol-%, vorzugsweise mehr als 12 mol-%, insbesondere mehr als 14 mol-%, bezogen auf die Gesamtmenge der Verbindungen der Formel (I) und (II), Verbindungen der Formel (II) mit m+n=2 enthält.

Die Verbindungen der Formel (I) sowie die Verbindungen der Formel (II) können jeweils einzeln oder auch als Mischung mehrerer Verbindungen der Formel (I) bzw. (II) eingesetzt werden.

Die Zusammensetzung der erfindungsgemäßen Monomermischungen ist prinzipiell beliebig, sie kann dazu genutzt werden, das Eigenschaftsprofil des erfindungsgemäßen Kunststoffes gemäß den Bedürfnissen der Anwendung "maßzuschneidern". Beispielsweise kann es äußerst zweckmäßig sein, dass die Monomermischung einen deutlichen Überschuss an Verbindung(en) der Formel (I) oder Verbindung(en) der Formel (II) enthält.

Es hat sich jedoch als überaus zweckmäßig erwiesen, die Zusammensetzung der Monomermischung so zu wählen, dass sich die mindestens eine Verbindung der Formel (I) und die mindestens eine Verbindung der Formel (II) bei der gewünschten Polymerisationstemperatur homogen mischen, weil derartige Mischungen aufgrund ihrer i. a. niedrigen Viskosität leicht handhabbar sind und darüber hinaus zu homogenen Kunststoffen mit verbesserten Materialeigenschaften polymerisiert werden können.

Weiterhin ist es erfindungsgemäß besonders günstig, Mischungen im Verfahren einzusetzen, die mehr als 5,8 mol-%, zweckmäßigerweise mehr als 6,5 mol-%, insbesondere mehr als 7,5 mol-%, bezogen auf die Gesamtmenge der Verbindungen der Formel (I) und (II), Verbindungen der Formel (II) mit m+n=3 enthalten. Der Anteil der Verbindungen (I) beträgt vorzugsweise 0,1 bis 50,0 mol-%, zweckmäßigerweise 10,0 bis 45,0 mol%, insbesondere 20,0 bis 35,0 mol-%, bezogen auf die Gesamtmenge der Verbindungen der Formel (I) und (II). Der Anteil der Verbindungen (II) mit m+n=1 ist vorzugsweise größer 20,0 mol-%, günstigerweise größer 30,0 mol-%, zweckmäßigerweise größer 35,0 mol-%, insbesondere größer 40 mol-%, bezogen auf die Gesamtmenge der Verbindungen der Formel (I) und (II). Der Anteil der Verbindungen (II) mit m+n>3 ist vorzugsweise größer 0 mol-%, zweckmäßigerweise größer 1 mol-%, insbesondere größer 2 mol-%, bezogen auf die Gesamtmenge der Verbindungen der Formel (I) und (II).

Verfahren zur Herstellung der erfindungsgemäßen Monomerzusammensetzungen sind dem Fachmann unmittelbar offensichtlich. Beispielsweise können sie durch ein- oder mehrstufiges Mischen der einzelnen Komponenten erhalten werden. Dennoch hat es sich im Rahmen der vorliegenden Erfindung als ganz besonders günstig erwiesen, die erfindungsgemäßen Monomermischungen durch ein Verfahren herzustellen, bei welchem man 1,0 bis < 2,0 mol, vorzugsweise 1,1 bis 1,8 mol, zweckmäßigerweise 1,2 bis 1,6 mol, insbesondere 1,2 bis 1,5 mol, mindestens einer Verbindung der Formel (III)

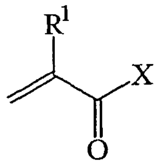

(III)

mit einem mol mindestens eines Polythiols der Formel (IV) umsetzt

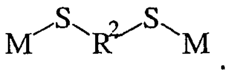

(IV)

Der Rest X steht für Chlor oder für einen Rest

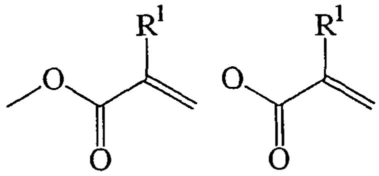

,

d. h. die Verbindungen der Formel (III) umfassen Acrylsäurechlorid, Methacrylsäurechlorid, Acrylsäureanhydrid und Methacrylsäureanhydrid, wobei der Einsatz von Acrylsäureanhydrid, Methacrylsäureanhydrid oder Mischungen der beiden besonders bevorzugt ist.

M kennzeichnet jeweils unabhängig voneinander Wasserstoff oder ein Metallkation. Bevorzugte Metallkationen leiten sich von Elementen mit einer Etektronegativität kleiner 2,0, zweckmäßigerweise kleiner 1,5, ab, wobei Alkalimetallkationene, insbesondere $Na^+$, $K^+$, $Rb^+$, $Cs^+$, und Erdalkalimetallkationen, insbesondere $Mg^{2+}$, $Ca^{2+}$, $Sr^{2+}$, $Ba^{2+}$, besonders bevorzugt sind. Ganz besonders günstige Ergebnisse können mit den Metallkationen $Na^+$ und $K^+$ erzielt werden.

Erfindungsgemäß besonders geeignete Polythiole der Formel (IV) umfassen 1,2-Ethandithiol, 1,2-Propandithiol, 1,3-Propandithiol, 1,2-Butandithiol, 1,3-Butandithiol, 1,4-Butandithiol, 2-Methylpropan-1,2-dithiol, 2-Methylpropan-1,3-dithiol, 3,6-Dioxa-1,8-octandithiol, Ethylcyclohexyldimercaptane, die durch Umsetzung von 4-Ethenyl-cyclohexen mit Schwefelwasserstoff erhältlich sind, ortho-Bis(mercaptomethyl)benzol, meta-Bis(mercaptomethyl)benzol, para-Bis (mercaptomethyl)benzol, Verbindungen der Formel

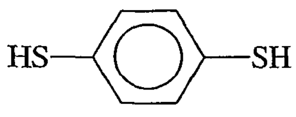

,

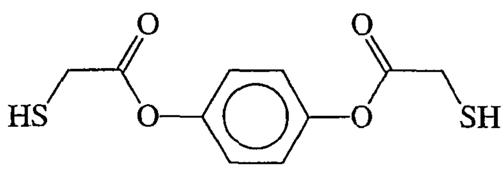

,

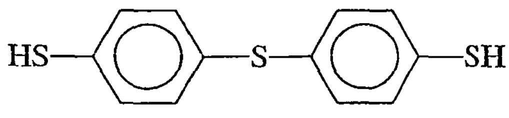

,

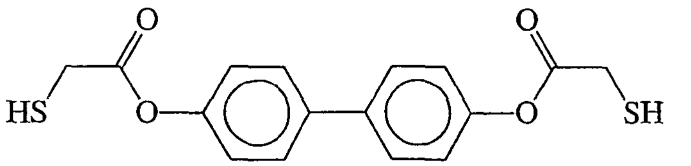

,

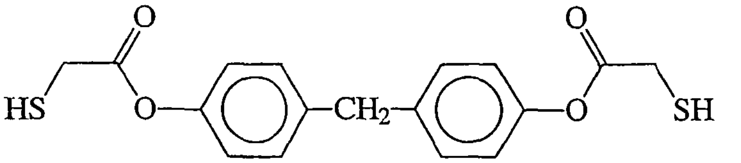

,

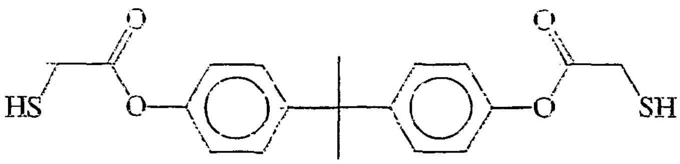

sowie Verbindungen der Formel

$$HS\left[\left(R^3-X\right)_y R^4\right]SH \quad \text{(IVa)}$$

,

wobei $R^3$ jeweils unabhängig voneinander ein linearer oder verzweigter, aliphatischer oder cycloaliphatischer Rest, wie beispielsweise eine Methylen-, Ethylen-, Propylen-, iso-Propylen-, n-Butylen-, iso-Butylen-, t-Butylen- oder Cyclohexylen-Gruppe ist. Dabei umfassen im Rahmen der vorliegenden Erfindung cycloaliphatische Reste auch bi-, tri- und polycyclische aliphatische Reste. Der Rest X ist jeweils unabhängig voneinander Sauerstoff oder Schwefel und der Rest $R^4$ steht für einen linearen oder verzweigten, aliphatischen oder cycloaliphatischen Rest, wie beispielsweise eine Methylen-, Ethylen-, Propylen-, iso-Propylen-, n-Butylen-, iso-Butylen-, t-Butylen- oder Cyclohexylen-Gruppe. Dabei umfassen im Rahmen der vorliegenden Erfindung cycloaliphatische Reste auch bi-, tri- und polycyclische aliphatische Reste. y ist eine ganze Zahl zwischen 1 und 10, insbesondere 1, 2, 3 und 4.

Bevorzugte Verbindungen der Formel (IVa) umfassen:

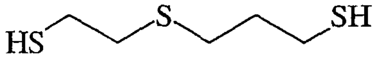

,

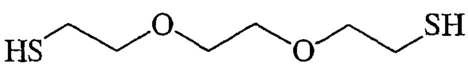

,

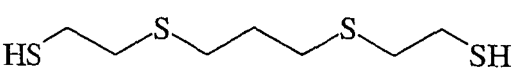

und

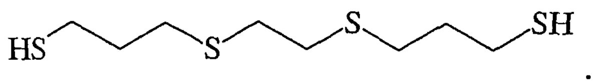

Im Rahmen einer ganz besonders bevorzugten Ausführungsform der vorliegenden Erfindung wird 1,2-Ethandithiol als Verbindung der Formel (IV) eingesetzt.

Erfindungsgemäß werden die Verbindung(en) der Formel (III) in mindestens einem inerten, organischen Lösungsmittel L und die Verbindung(en) der Formel (IV) in wässrig-alkalischer Lösung zur Reaktion gebracht, wobei der Begriff "inertes, organisches Lösungsmittel" für solche organischen Lösungsmittel steht, die unter den jeweiligen Reaktionsbedingungen nicht mit den im Reaktionssystem vorliegenden Verbindungen reagieren.

Für die Zwecke der vorliegenden Erfindung muss mindestens ein Lösungsmittel L eine relative Dielektrizitätskonstante > 2,6, vorzugsweise > 3,0, zweckmäßigerweise > 4,0, insbesondere > 5,0, jeweils gemessen bei 20°C, aufweisen. In diesem Zusammenhang bezeichnet die relative Dielektrizitätskonstante eine dimensionslose Zahl, die angibt, auf das Wievielfache sich die Kapazität C eines (theoretisch) im Vakuum befindlichen Kondensators erhöht, wenn man zwischen die Platten Stoffe mit dielektrischen Eigenschaften, sogenannte Dielektrika bringt. Dieser Wert wird bei 20°C gemessen und auf niedrige Frequenzen ($\omega \rightarrow 0$) extrapoliert. Für weitere Details wird auf die gängige Fachliteratur, insbesondere auf Ullmann Encyklopädie der technischen Chemie, Band 2/1 Anwendung physikalischer und physikalisch-chemischer Methoden im Laboratorium, Stichwort: Dielektrizitätskonstante, S. 455 - 479 verwiesen. Dielektrizitätswerte von Lösungsmittel sind u. a. im Handbook of Chemistry and Physics, 71. Auflage, CRC Press, Baco Raton, Ann Arbor, Boston, 1990-1991, S. 8-44, 8-46 und 9-9 bis 9-12 angegeben.

Im Rahmen der vorliegenden Erfindung ist es weiterhin besonders vorteilhaft, wenn das Lösungsmittel und die wässrige Lösung während der Umsetzung zwei Phasen ausbilden und nicht homogen mischbar sind. Zu diesem Zweck weist das Lösungsmittel vorzugsweise eine Wasserlöslichkeit, gemessen bei 20°C, kleiner 10g Wasser bezogen auf 100 g Lösungsmittel auf.

Erfindungsgemäß bevorzugte Lösungsmittel L umfassen
aliphatische Ether, wie Diethylether (4,335), Dipropylether, Diisopropylether; cycloaliphatische Ether, wie Tetrahydrofuran (7,6);
aliphatische Ester, wie Methylformiat (8,5), Ethylformiat, Propylformiat, Methylacetat, Essigester, n-Butylacetat (5,01), Methylpropionat, Methylbutyrat (5,6), Ethylbutyrat, 2-Methoxyethylacetat;
aromatische Ester, wie Benzylacetat, Dimethylphthalat, Methylbenzoat (6,59), Ethylbenzoat (6,02), Methylsalicylat, Ethylsalicylat, Phenylacetat (5,23);
aliphatische Ketone, wie Aceton, Methylethylketon (18,5), Pentanon-2 (15,4), Pentanon-3 (17,0), Methylisoamylketon, Methylisobutylketon (13,1); aromatische Ketone, wie Acetophenon;
Nitroaromaten, wie Nitrobenzol, o-Nitrotoluol (27,4), m-Nitrotoluol (23), p-Nitrotoluol;
halogenierte Aromaten, wie Chlorbenzol (5,708), o-Chlorotoluol (4,45), m-Chlorotoluol (5,55), p-Chlorotoluol (6,08), o-Dichlorobenzol, m-Dichlorobenzol;
Heteroaromaten, wie Pyridin, 2-Methylpyridin (9,8), Chinolin, Isochinolin;
oder Mischungen dieser Verbindungen, wobei die Angaben die Klammern die jeweiligen, zugehörigen, relativen Dielektrizitätskonstanten bei 20°C sind.

Dabei sind für die Zwecke der vorliegenden Erfindung aliphatische Ester und cycloaliphatische Ether, insbesondere Ethylacetat und Tetrahydrofuran ganz besonders geeignet.

Im Rahmen der vorliegenden Erfindung kann das Lösungsmittel L sowohl allein als auch eine Lösungsmittelmischung eingesetzt werden, wobei nicht alle im Gemisch enthaltenen Lösungsmittel das vorstehende Dielektrizitätskriterium erfüllen müssen. Beispielsweise können auch Tetrahydrofuran/Cyclohexan-Mischungein erfindungsgemäß eingesetzt werden. Jedoch hat es sich als zweckmäßig erwiesen, dass das Lösungsmittelgemisch eine relative Dielektrizitätskonstante > 2,6, vorzugsweise > 3,0, zweckmäßigerweise > 4,0, insbesondere > 5,0, jeweils gemessen bei 20°C, aufweist. Besonders vorteilhafte Ergebnisse können mit Lösungsmittelmischungen erzielt werden, welche nur Lösungsmittel mit einer relativen Dielektrizitätskonstante > 2,6, vorzugsweise > 3,0, zweckmäßigerweise > 4,0, insbesondere > 5,0, jeweils gemessen bei 20°C, enthalten.

Die wässrig-alkalische Lösung der Verbindung(en) der Formel (IV) enthält vorzugsweise 1,1 bis 1,5 val (Äquivalente) mindestens einer Bronsted-Base, bezogen auf die Gesamtmenge an Verbindung(en) der Formel (III). Bevorzugte Bronsted-Basen im Sinne der vorliegenden Erfindung umfassen Alkalihydroxide und Erdalkalihydroxide, insbesondere Natriumhydroxid und Kaliumhydroxid.

Die Durchführung der Umsetzung kann in prinzipiell in jeder erdenklichen Weise erfolgen, Beispielsweise ist

es möglich, die Verbindung(en) der Formel (III) im Lösungsmittel(gemisch) L vorzulegen und die wässrig-alkalische Lösung der Verbindung(en) der Formel (IV) schrittweise oder kontinuierlich zuzugeben. Dennoch hat es sich im Rahmen der vorliegenden Erfindung als ganz besonders günstig erwiesen, die Verbindung(en) der Formel (III) in mindestens einem inerten, organischen Lösungsmittel L und die Verbindung(en) der Formel (IV) in wässrig-alkalischer Lösung parallel dem Reaktionsgefäß zuzudosieren.

Die Reaktionstemperatur kann man über einen weiten Bereich variieren, aber häufig liegt die Temperatur im Bereich von 20,0 °C bis 120,0 °C, vorzugsweise im Bereich von 20,0 °C bis 80,0 °C. Ähnliches gilt für den Druck bei der die Umsetzung vollzogen wird. So kann die Reaktion sowohl bei Unterdruck als auch bei Überdruck stattfinden. Vorzugsweise wird sie aber bei Normaldruck durchgeführt. Obwohl die Reaktion auch unter Luft stattfinden kann, hat es sich im Rahmen der vorliegenden Erfindung als ganz besonders günstig erwiesen die Umsetzung unter Schutzgasatmosphäre, vorzugsweise Stickstoff und/oder Argon, durchzuführen, wobei vorzugsweise ein geringer Sauerstoffanteil vorhanden ist.

Günstigerweise wird das Reaktionsgemisch in einem weiteren Schritt mit einer Bronsted-Säure umgesetzt, vorzugsweise bis die wässrige Lösung bei 20°C einen pH-Wert kleiner 7,0, zweckmäßigerweise kleiner 6,0, insbesondere kleiner 5,0, aufweist. Einsetzbare Säuren umfassen in diesem Zusammenhang anorganische Mineralsäuren, wie Salzsäure, Schwefelsäure, Phosphorsäure, organische Säuren, wie Essigsäure, Propionsäure, und saure Ionenaustauscher, insbesondere saure Kunstharzionenaustauscher, wie beispielsweise ®Dowex M-31 (H). Dabei hat sich der Einsatz von sauren Kunstharzionenaustauschern mit Beladungen von mindestens 1,0 meq, vorzugsweise mindestens 2,0 meq, insbesondere mindestens 4,0 meq, $H^+$-Ionen bezogen auf 1 g getrockneten Ionenaustauscher, Korngrößen von 10-50 mesh und Porositäten im Bereich von 10 bis 50 % bezogen auf das Gesamtvolumen des Ionenaustauschers ganz besonders bewährt.

Zur Isolierung der Verbindungen der Formel (I) und (II) wird zweckmäßigerweise die aus dem Lösungsmittel L bestehende organische Phase abgetrennt, gegebenenfalls gewaschen, getrocknet und das Lösungsmittel verdampft.

Bei der Umsetzung der Verbindung(en) der Formel (III) mit der bzw. den Verbindung(en) der Formel (IV) können Inhibitoren zugesetzt werden, die eine radikalische Polymerisation der (Meth)acrylgruppen während der Reaktion verhindern. Diese Inhibitoren sind in der Fachwelt weithin bekannt.

Eingesetzt werden hauptsächlich 1,4-Dihydroxybenzole. Es können jedoch auch anders substituierte Dihydroxybenzole zum Einsatz kommen. Allgemein lassen sich derartige Inhibitoren mit der allgemeinen Formel (V) wiedergeben

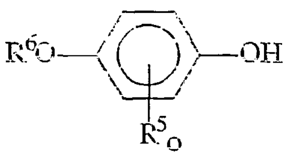

(V)

worin

$R^5$ einen linearen oder verzweigten Alkylrest mit eins bis acht Kohlenstoffatomen, Halogen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, terfi.-Butyl, Cl, F oder Br;

o eine ganze Zahl im Bereich von eins bis vier, vorzugsweise eins oder zwei ist; und

$R^6$ Wasserstoff, einen linearen oder verzweigten Alkylrest mit eins bis acht Kohlenstoffatomen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl oder tert.-Butyl.

Es können jedoch auch Verbindungen mit 1,4-Benzochinon als Stammverbindung eingesetzt werden. Diese lassen sich mit der Formel (VI) beschreiben

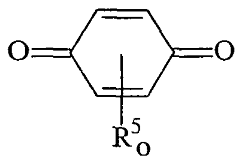

(VI)

worin

$R^5$ einen linearen oder verzweigten Alkylrest mit eins bis acht Kohlenstoffatomen, Halogen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, Cl, F oder Br; und
o eine ganze Zahl im Bereich von eins bis vier, vorzugsweise eins oder zwei ist

Ebenso werden Phenole der allgemeinen Struktur (VII) eingesetzt

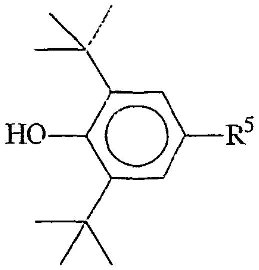

(VII)

worin

$R^5$ einen linearen oder verzweigten Alkylrest mit eins bis acht Kohlenstoffatomen, Aryl oder Aralkyl, Propionsäureester mit 1 bis 4 wertigen Alkoholen, welche auch Heteroatome wie S, O und N enthalten können, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, bedeutet.

Eine weitere vorteilhafte Substanzklasse stellen gehinderte Phenole auf Basis von Triazinderivaten der Formel (VIII) dar

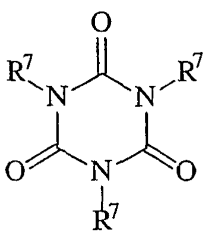

(VIII)

mit $R^7$ = Verbindung der Formel (IX)

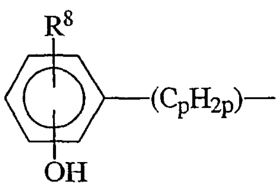

(IX)

worin

$R^8 = O_pH_{2p+1}$

mit p = 1 oder 2 ist.

Besonders erfolgreich werden die Verbindungen 1,4-Dihydroxybenzol, 4-Methoxyphenol, 2,5-Dichloro-3,6-dihydroxy-1,4-benzochinon, 1 ,3,5-Trimethyl-2,4,5-tris-(3,5-di-tert.butarl-4-hydroxybenzyl)benzol, 2,6-Di-tert.butyl-4-methylphenol, 2,4.-Dimethyl-6-tert.butylphenol, 2,2-Bis [3,5-Bis(1,1-dimethylethyl)-4-hydroxyphenyl-1-oxopropoxymethyl)]1,3-propandiylester, 2,2'-Thiodiethylbis-[3-(3,5-di-tert.butyl-4-hydroxyphenyl)]propionat, Octadecyl-3-(3,5-di-tert.butyl-4-hydroxyphenyl)propionat, 3,5-Bis(1,1-dimethylethyl-2,2-Methylenbis-(4-methyl-6-tert.butyl)phenol, Tris-(4-tert.butyl-3-hydroxy-2,6-dimethylbenzyl)-s-triazin-2,4,6-(1 H,3H,5H)trion, Tris (3,5-ditert.butyl-4-hydroxy)-s-triazin-2,46-(1 H, 3H,5H) trion oder tert Butyl-3,5-dihydroxybenzol eingesetzt.

Bezogen auf das Gewicht der gesamten Reaktionsmischung beträgt der Anteil der Inhibitoren einzeln oder als Mischung im allgemeinen 0,01 - 0,50 % (wt/wt), wobei man die Konzentration der Inhibitoren vorzugsweise so auswählt, dass die Farbzahl gemäß DIN 55945 nicht beeinträchtigt wird. Viele dieser Inhibitoren sind kommerziell erhältlich.

Erfindungsgemäß wird durch das erfindungsgemäße Verfahren ein hochtransparenter Kunststoff mit sehr guten mechanischen Eigenschaften zur Verfügung gestellt. In einer bevorzugten Ausführungsform der vorliegenden Erfindung weist der hochtransparente Kunststoff eine Schlagzähigkeit nach Charpy gemessen nach ISO 179/1fU größer 3,0 $kJ/m^2$ auf.

Der erfindungsgemäße Kunststoff zeichnet sich weiterhin durch eine hohe Vicat-Temperatur gemessen nach ISO 306 aus, so dass er auch bei Temperaturen oberhalb Raumtemperatur seine guten mechanischen Eigenschaften, insbesondere seine Schlagzähigkeit nach Charpy und seine Härte behält. Vorzugsweise ist die Vicat-Temperatur des erfindungsgemäßen Kunststoffes gemessen nach ISO 306 größer 50°C, zweckmäßigerweise größer 60°C, insbesondere größer 70°C. Dabei haben sich Vicat-Temperaturen des erfindungsgemäßen Kunststoffes gemessen nach ISO 306 größer 80°C, vorzugsweise größer 90°C, zweckmäßigerweise größer 100°C, insbesondere größer 120°C als ganz besonders vorteilhaft erwiesen. Im Rahmen einer ganz besonders bevorzugten Ausführungsform der vorliegenden Erfindung weisen die Kunststoffe eine Vicat-Temperatur gemessen nach ISO 306 größer 140°C, vorzugsweise größer 160°C, insbesondere größer 180°C, auf.

Mögliche Einsatzgebiete für den erfindungsgemäßen hochtransparenten Kunststoff sind dem Fachmann offensichtlich. Er eignet sich insbesondere für alle Anwendungen, die für transparente Kunststoffe vorgezeichnet sind. Aufgrund seiner charakteristischen Eigenschaften ist er vor allem für optische Linsen, insbesondere für ophthalmische Linsen geeignet.

Die nachfolgenden Beispiele B1 bis B4 und Vergleichsbeispiele VB1 bis VB3 dienen zur Erläuterung der Erfindung, ohne dass hierdurch eine Beschränkung erfolgen soll. Dabei werden die jeweils eingesetzten Substanzen in Tabelle 1, Details zur Versuchsdurchführung in Tabelle 2 und die Eigenschaften der resultierenden Produktmischungen in der Tabelle 3 angegeben.

Vergleichsbeispiele VB1 bis VB3 (gemäß DE 42 34 251)

In einer 4-1-Rührapparatur werden die gewünschte Menge an Methacrylsäureanhydrid (MASA) stabilisiert mit 500 ppm 4-Methyl-2,6-di-tert.-butylphenol und 766 ml des gewünschten Lösungsmittels vorgelegt. Parallel dazu löst man bei 15-20°C unter Stickstoffatmosphäre 94,2 g (1 mol) 1,2-Ethandithiol in der gewünschten Menge an 13%iger wässriger NaOH-Lösung. Die erhaltene Natriumthiolat-Lösung tropft man nun - gegebenenfalls unter Inertisierung - unter gutem Rühren bei der gewünschten Dosiertemperatur innerhalb 1 h zu. Anschließend wird der Ansatz unter den gewünschten Nachreaktionsbedingungen gerührt.

Zur Aufarbeitung wird das Reaktionsgemisch auf Raumtemperatur abgekühlt, die untere, wässrige Phase abgetrennt und die organische Phase mit 333 g verdünntem Ammoniak (5%ig) ausgeschüttelt. Anschließend wäscht man drei mal mit je 333 g VE-Wasser nach und trennt scharf ab. Die Rohesterlösung wird mit weiteren 300 ppm 4-Methyl-2,6-di-tert.-butylphenol stabilisiert und am Rotationsverdampfer bei max. 45°C eingeengt.

erfindungsgemäße Beispiele B1 und B2

94,2 g (1 mol) 1,2-Ethandithiol werden in einen Erlenmeyerkolben mit Schutzgas-Einleitung eingewogen und gerührt und die gewünschte Menge an 13%ige NaOH-Lösung wird innerhalb von 30 Minuten bei 25-30°C unter Wasserkühlung zudosiert. Es bildet sich eine bräunliche, klare Lösung.

Die gewünschte Menge an MASA und die Na- Thiolat-Lösung werden nun parallel bei der gewünschten Dosiertemperatur innerhalb von 45 Minuten zu dem vorgelegten und gerührten Lösemittel/Wasser im Reaktionskolben

dosiert. Dabei wird gegebenenfalls Schutzgas über den Ansatz geleitet. Im allgemeinen kühlt der Kolbeninhalt bei Zulaufbeginn um ca. 2°C ab, nach ca. 5-10 Minuten beginnt eine leicht exotherme Reaktion, d. h. nun kühlt man entsprechend, um die gewünschte Reaktionstemperatur einzuhalten. Nach Zulaufende rührt man den Ansatz noch unter den gewünschten Reaktionsbedingungen und kühlt ihn dann unter Rühren auf ca. 25°C ab.

Der Ansatz wird in einen Scheidetrichter überführt, aufgetrennt und die untere, wässrige Phase abgelassen. Die organische Phase wird mit 87,5 g 5%ig wässriger Phosphorsäure ausgeschüttelt, und anschließend zur Neutralisation zweimal mit 50 g VE-Wasser nachgewaschen.

Die etwas trübe bis fast klare Rohesterlösung wird nun mit 100 ppm HQME stabilisiert und am Rotationsverdampfer bei max. 50°C eingeengt. Das Endprodukt wird gegebenenfalls bei Raumtemperatur (20-25°C) mit 0,5% kieselgur versetzt und ca. 10 Minuten gerührt. Anschließend filtriert man über eine Seitz Filterschicht K800 und eine 0,45 μm Filtermembran bei ca. 1 bar.

<u>erfindungsgemäße Beispiele B3 und B4</u>

94,2 g (1 mol) 1 ,2-Ethandithiol werden in einen Erlenmeyerkolben mit Schutzgas-Einleitung eingewogen und gerührt und die gewünschte Menge an 13%ige NaOH-Lösung wird innerhalb von 30 Minuten bei 25-30°C unter Wasserkühlung zudosiert. Es bildet sich eine bräunliche, klare Lösung.

Die gewünschte Menge an MASA und die Na- Thiolat-Lösung werden nun parallel bei der gewünschten Dosiertemperatur innerhalb von 45 Minuten zu dem vorgelegten und gerührten Lösemittel/Wasser im Reaktionskolben dosiert. Dabei wird gegebenenfalls Schutzgas über den Ansatz geleitet. Im allgemeinen kühlt der Kolbeninhalt bei Zulaufbeginn um ca. 2°C ab, nach ca. 5-10 Minuten beginnt eine leicht exotherme Reaktion, d. h. nun kühlt man entsprechend, um die gewünschte Reaktionstemperatur einzuhalten. Nach Zulaufende rührt man den Ansatz noch unter den gewünschten Reaktionsbedingungen und kühlt ihn dann unter Rühren auf ca. 25°C ab.

Der Ansatz wird in einen Scheidetrichter überführt, aufgetrennt und die untere, wässrige Phase abgelassen. Zur Aufarbeitung wird die organische Phase in einen Erlenmeyerkolben überführt und mit Dowex M31 ca. 15 Minuten gerührt, anschließend filtriert man den lonentauscher ab.

Die etwas trübe bis fast klare Rohesterlösung wird nun mit 100 ppm HQME stabilisiert und am Rotationsverdampfer bei max. 50°C eingeengt. Das farblose Endprodukt wird gegebenenfalls bei Raumtemperatur (20-25°C) mit 0,5% Kieselgur versetzt und ca. 10 Minuten gerührt. Anschließend filtriert man über eine Seitz Filterschicht K800 und eine 0,45 μm Filtermembran bei ca. 1 bar.

Tabelle 1: eingesetzte Substanzen

| | 1,2-Ethandithiol [mol] | MASA [mol] | NaOH [mol] | Lösungsmittel |
|---|---|---|---|---|
| VB1 | 1 | 2,100 | 2,300 | Methyl-tert.-Butylether |
| VB2 | 1 | 1,520 | 1,500 | Methyl-tert.-Butylether |
| VB3 | 1 | 2,100 | 2,300 | Essigester |
| B1 | 1 | 1,520 | 1,760 | Essigester |
| B2 | 1 | 1,520 | 1,760 | Essigester |
| B3 | 1 | 1,450 | 1,692 | Essigester |
| B4 | 1 | 1,450 | 1,692 | Essigester |

Tabelle 2: Reaktionsbedingungen

| | Dosiertemperatur [°C] | Schutzgas | Nachreaktionsbedingungen | Konzentration an EDTDMA in der Reaktionslösung [% d. Th.] |
|---|---|---|---|---|
| VB1 | 10-15 | nein | 3 h bei 40°C | 24,7 |
| VB2 | 20-25 | ja | 2 h bei 40°C | 25,0 |
| VB3 | 15-20 | nein | 3 h bei 40°C | 23,0 |
| B1 | 40 | nein | 2 h bei 40°C | 15,0 |
| B2 | 40 | ja | 2 h bei 40°C | 15,0 |

(fortgesetzt)

| | Dosiertemperatur [°C] | Schutzgas | Nachreaktionsbedingungen | Konzentration an EDTDMA in der Reaktionslösung [% d. Th.] |
|---|---|---|---|---|
| B3 | 35 | ja | 5 min bei 35°C | 15,0 |
| B4 | 35 | ja | 5 min bei 35°C | 20,0 |

Tabelle 3: Charakterisierung der Produktmischungen

| | $n_D^{20}$ | Farbe | MASA [mol-%] | EDTDMA [mol-%] | Monoaddukte [mol-%] | Diaddukte [mol-%] | Triaddukte [mol-%] |
|---|---|---|---|---|---|---|---|
| VB1 | 1,5645 | farblos | | 52,3 | 27,4 | 6,6 | 5,8 |
| VB2 | 1,5600 | farblos | 4,5 | 58,5 | 23,3 | 6,3 | 2,4 |
| VB3 | 1,5571 | gelb | <1 | 71,4 | 18,9 | 2,6 | <1 |
| B1 | 1,5700 | gelb | <1 | 37,9 | 37,5 | 13,2 | 5,9 |
| B2 | 1,5704 | farblos | | 39,2 | 36,3 | 14,4 | 6,3 |
| B3 | 1,5733 | farblos | <1 | 29,6 | 38,8 | 13,9 | 8,0 |
| B4 | 1,5729 | farblos | <1 | 24,0 | 44,1 | 16,3 | 8,0 |

EDTDMA: 1,2-Ethandithioldimethacrylat
Monoaddukte: Verbindungen gemäß Formel (II) mit $R^1$=Methyl; $R^2$=1,2-Ethylen; m+n=1
Diaddukte: Verbindungen gemäß Formel (II) mit $R^1$=Methyl; $R^2$=1,2-Ethylen; m+n=2
Triaddukte: Verbindungen gemäß Formel (II) mit $R^1$=Methyl; $R^2$=1,2-Ethylen; m+n=3

Polymerisation von Beispiel B4

Zur Polymerisation werden 90 g des Oligomerengemisches aus Beispiel B4 und 0,15 % (135 mg) t-Butylperoctoat eingewogen und gelöst. Anschließend wird der Ansatz in eine Kammer 200 x 150 x 3 mm gefüllt und polymerisiert.

Temperaturprogramm: 20 h 62°C im Wasserbad, 3 h 80°C und 3 h 120°C im Wärmeschrank.

Eigenschaften des resultierenden Polymers:

| | |
|---|---|
| $n_D^{20}$ (gemäß DIN 53491 bei $\lambda$ = 589 nm): | 1,6169; |
| Abbesche Zahl (gemäß DIN 53491): | 38,9; |
| Schlagzähigkeit nach Charpy (gemäß ISO 179 1fU) : | 3,28 KJ/m$^2$ ; |
| Vicattemperatur (gemäß ISO 306) : | >180°C ; |
| Transmission (gemäß DIN 5036) : | 89,31 % |

Das Vergleichsbeispiel aus DE 42 34 251 (Beispiel VI) weist folgende Eigenschaften auf:

| | |
|---|---|
| $n_D^{20}$: | 1,6079; |
| Abbesche Zahl: | 35; |
| Schlagzähigkeit (nur qualitativ beschrieben): | farbloses hartes, leicht sprödes Material; |
| Vicattemperatur: | keine Angaben; |
| Transmission: | keine Angaben |

**Patentansprüche**

**1.** Verfahren zur Herstellung einer Mischung, enthaltend die Verbindungen der Formel I
und
Formel II

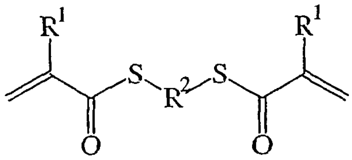

(I)

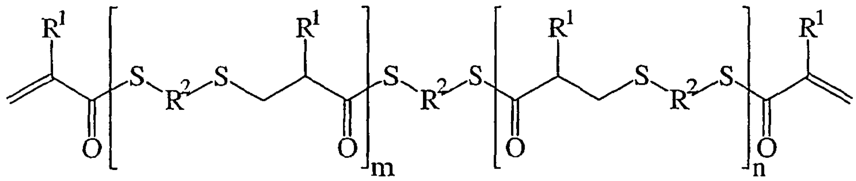

(II)

,

worin $R^1$ jeweils unabhängig voneinander Wasserstoff oder einen Methylrest,
$R^2$ jeweils unabhängig voneinander einen linearen oder verzweigten, aliphatischen oder cycloaliphatischen Rest oder einen substituierten oder unsubstituierten aromatischen oder heteroaromatischen Rest und
m und n jeweils unabhängig voneinander eine ganze Zahl größer gleich 0 mit m + n > 0 bedeuten,

**dadurch gekennzeichnet, dass** sie mehr als 10 mol-%, bezogen auf die Gesamtmenge der Verbindung gemäß Formel (I) und (II), Verbindungen der Formel (II) mit m+n=2 enthalten, **dadurch** herstellbar, dass man 1,0 bis weniger als 2,0 mol einer Verbindung der Formel (III),

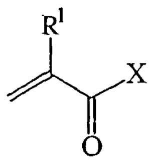

(III)

worin X für Chlor oder für einen Rest

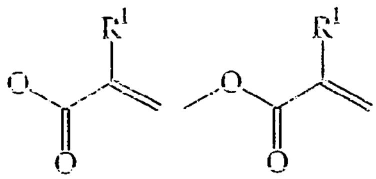

steht,
mit einem mol mindestens eines Polythiols der Formel (IV) umsetzt

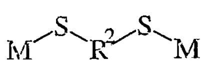

(IV)

,

worin M jeweils unabhängig voneinander für Wasserstoff oder ein Metallkation steht,
und, dass man als Lösungsmittel L Aceton, Acetonitril, Acetophenon, Benzylacetat, n-Butylacetat, Chinolin, Chlorbenzol, o-Chlorotoluol, m-Chlorotoluol, p-Chlorotoluol, o-Dichlorobenzol, m-Dichlorobenzol, Diethylether, Diisopropylether, Dimethylphthalat, Dipropylether, Essigester, Ethylbenzoat, Ethylbutyrat, Ethylformiat, Ethylsalicylat, Isochinolin, 2-Methoxyethylacetat, Methylacetat, Methylbenzoat, Methylbutyrat, Methylethylketon, Methylformiat, Methylisoamylketon, Methylisobutylketon, Methylpropionat, 2-Methylpyridin, N-Methyl-2-pyrrolidon, Methylsalicylat, Nitrobenzol, o-Nitrotoluol, m-Nitrotoluol, p-Nitrotoluol, Pentanon-2, Pentanon-3, Phenylacetat, Propylformiat, Pyridin, Tetrahydrofuran oder Mischungen dieser Verbindungen einsetzt.

2. Verfahren nach Anspruch 1, **dadurch gekennzeichnet, dass** man die Umsetzung unter Schutzgasatmosphäre durchführt.

3. Verfahren nach mindestens einem der vorangehenden Ansprüche 1 bis 2, **dadurch gekennzeichnet, dass** man als Verbindung der Formel (III) Acrylsäureanhydrid, Methacrylsäureanhydrid oder Mischungen der beiden einsetzt.

4. Verfahren nach mindestens einem der vorangehenden Ansprüche 1 bis 3, **dadurch gekennzeichnet, dass** man als Polythiol der Formel (IV) Ethandithiol einsetzt.

5. Verfahren nach mindestens einem der vorangehenden Ansprüche 1 - 5 , **dadurch gekennzeichnet, dass** man eine wässrig-alkalische Lösung der Verbindung(en) der Formel (IV) einsetzt, die 1,1 bis 1,5 val mindestens einer Bronsted-Base, bezogen auf die Gesamtmenge an Verbindung(en) der Formel (III), enthält.

6. Verfahren nach mindestens einem der vorangehenden Ansprüche 1 - 5, **dadurch gekennzeichnet, dass** man die Verbindung(en) der Formel (III) in mindestens einem inerten, organischen Lösungsmittel L und die Verbindung(e) der Formel (IV) in wässrig-alkalischer Lösung parallel dem Reaktionsgefäß zudosiert.

7. Verfahren nach mindestens einem der vorangehenden Ansprüche 1 bis 6, **dadurch gekennzeichnet, dass** man die Umsetzung bei Temperaturen im Bereich von 20°C bis 80°C durchführt.

8. Verwendung des Verfahrens nach Anspruch 1, **dadurch gekennzeichnet, dass** man einen sauren lonentauscher einsetzt.

9. Verwendung des hochtransparenten Kunststoffs gemäß mindestens einem der Ansprüche 1 bis 8 als optische Linse, bevorzugt als ophthalmische Linse.

10. Optische, insbesondere ophthalmische Linse aufweisend einen hochtransparenten Kunststoff gemäß mindestens einem der Ansprüche 1 bis 9.

**Claims**

1. Process for preparing a mixture containing the compounds of the formula I and formula II

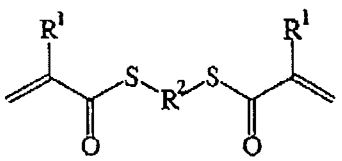

(I)

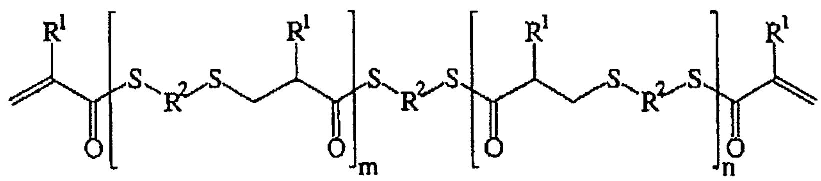

(II)

,

where $R^1$ is independently at each instance hydrogen or a methyl radical, $R^2$ is independently at each instance a linear or branched, aliphatic or cycloaliphatic radical or a substituted or unsubstituted aromatic or heteroaromatic

radical and m and n are each independently an integer of not less than 0 subject to the proviso that m + n > 0, **characterized in that** they contain more than 10 mol%, based on the total amount of the compound as per formula (I) and (II), of compounds of the formula (II) where m + n = 2, preparable by using 1.0 to less than 2.0 mol of a compound of the formula (III)

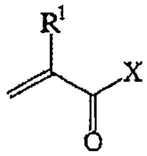

(III)

where X is chlorine or a radical

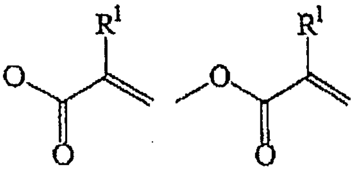

with one mole of at least one polythiol of the formula (IV)

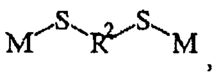

(IV)

where M is independently at each instance hydrogen or a metal cation,
and **in that** the solvent L is acetone, acetonitrile, acetophenone, benzyl acetate, n-butyl acetate, quinoline, chlorobenzene, o-chlorotoluene, m-chlorotoluene, p-chlorotoluene, o-dichlorobenzene, m-dichlorobenzene, diethyl ether, diisopropyl ether, dimethyl phthalate, dipropyl ether, ethyl acetate, ethyl benzoate, ethyl butyrate, ethyl formate, ethyl salicylate, isoquinoline, 2-methoxyethyl acetate, methyl acetate, methyl benzoate, methyl butyrate, methyl ethyl ketone, methyl formate, methyl isoamyl ketone, methyl isobutyl ketone, methyl propionate, 2-methylpyridine, N-methyl-2-pyrrolidone, methyl salicylate, nitrobenzene, o-nitrotoluene, m-nitrotoluene, p-nitrotoluene, 2-pentanone, 3-pentanone, phenyl acetate, propyl formate, pyridine, tetrahydrofuran or mixtures thereof.

2. Process according to Claim 1, **characterized in that** the reaction is carried out under protective gas atmosphere.

3. Process according to at least one of the preceding Claims 1 to 2, **characterized in that** the compound of the formula (III) is acrylic anhydride, methacrylic anhydride or mixtures thereof.

4. Process according to at least one of the preceding Claims 1 to 3, **characterized in that** the polythiol of the formula (IV) is ethanedithiol.

5. Process according to at least one of the preceding Claims 1-5, **characterized in that** the compound or compounds of the formula (IV) are used in the form of an aqueous alkaline solution which contains 1.1 to 1.5 equivalents of at least one Bronsted base, based on the total amount of compound or compounds of the formula (III).

6. Process according to at least one of the preceding Claims 1-5, **characterized in that** the compound or compounds of the formula (III) and the compound or compounds of the formula (IV) are concurrently metered into the reaction vessel in at least one inert organic solvent L and in an aqueous alkaline solution, respectively.

7. Process according to at least one of the preceding Claims 1 to 6, **characterized in that** the reaction is carried out

at temperatures in the range from 20°C to 80°C.

**8.** Use of the process according to Claim 1, **characterized in that** an acidic ion exchanger is used.

**9.** Use of the highly transparent plastic of at least one of Claims 1 to 8 as an optical lens, preferably ophthalmic lens.

**10.** Optical especially ophthalmic lens comprising a highly transparent plastic as claimed in at least one of Claims 1 to 9.

## Revendications

**1.** Procédé de préparation d'un mélange contenant les composés de la formule I et de la formule II :

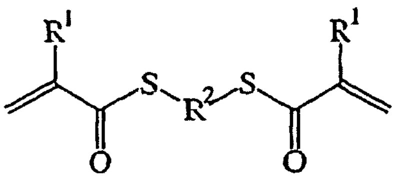

(I)

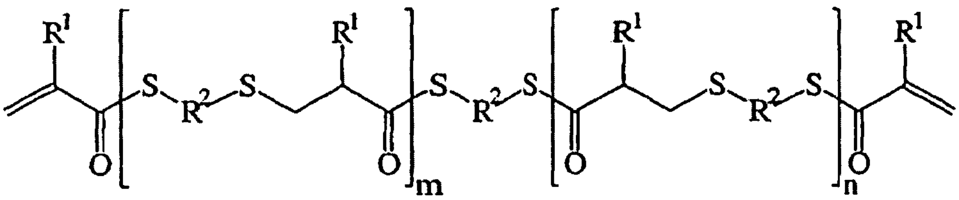

(II)

,

dans lesquelles les $R^1$ représentent chacun indépendamment les uns des autres de l'hydrogène ou un radical méthyle, les $R^2$ représentent chacun indépendamment les uns des autres un radical linéaire ou ramifié, aliphatique ou cycloaliphatique, ou un radical aromatique ou hétéroaromatique, substitué ou non substitué, et m et n représentent chacun indépendamment l'un de l'autre un nombre entier supérieur ou égal à 0 avec m+n>0,
**caractérisé en ce que** le mélange contient plus de 10 % molaires, par rapport à la quantité totale des composés selon les formules (I) et (II), de composés de la formule (II) avec m+n=2, **en ce qu'**il peut être préparé en faisant réagir 1,0 à moins de 2,0 moles d'un composé de la formule (III) :

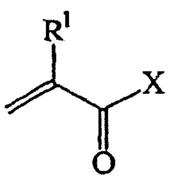

(III)

dans laquelle X représente du chlore ou un radical

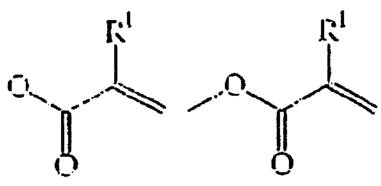

avec une mole d'au moins un polythiol de la formule (IV) :

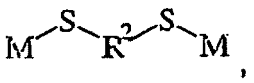

(IV)

dans laquelle les M représentent chacun indépendamment l'un de l'autre de l'hydrogène ou un cation métallique, et en mettant en oeuvre, comme solvant L, de l'acétone, de l'acétonitrile, de l'acétophénone, de l'acétate de benzyle, de l'acétate de n-butyle, de la quinoléine, du chlorobenzène, du o-chlorotoluène, du m-chlorotoluène, du p-chlorotoluène, du o-dichlorobenzène, du m-dichlorobenzène, de l'éther diéthylique, de l'éther diisopropylique, du phtalate de diméthyle, de l'éther dipropylique, de l'acétate d'éthyle, du benzoate d'éthyle, du butyrate d'éthyle, du formiate d'éthyle, du salicylate d'éthyle, de l'isoquinoléine, de l'acétate de 2-méthoxyéthyle, de l'acétate de méthyle, du benzoate de méthyle, du butyrate de méthyle, de la méthyléthylcétone, du formiate de méthyle, de la méthylisoamylcétone, de la méthylisobutylcétone, du propionate de méthyle, de la 2-méthylpyridine, de la N-méthyl-2-pyrrolidone, du salicylate de méthyle, du nitrobenzène, du o-nitrotoluène, du m-nitroluène, du p-nitrotoluène, de la pentanone-2, de la pentanone-3, de l'acétate de phényle, du formiate de propyle, de la pyridine, du tétrahydrofuranne ou des mélanges de ces composés.

2. Procédé suivant la revendication 1, **caractérisé en ce qu'**on effectue la réaction sous une atmosphère de gaz de protection.

3. Procédé suivant au moins l'une des revendications précédentes 1 et 2, **caractérisé en ce que**, comme composé de la formule (III), on met en oeuvre de l'anhydride d'acide acrylique, de l'anhydride d'acide méthacrylique ou des mélanges des deux.

4. Procédé suivant au moins l'une des revendications précédentes 1 à 3, **caractérisé en ce que**, comme polythiol de la formule (IV), on met en oeuvre de l'éthanedithiol.

5. Procédé suivant au moins l'une des revendications précédentes 1 à 5, **caractérisé en ce qu'**on met en oeuvre une solution aqueuse-alcaline du ou des composés de la formule (IV), qui contient 1,1 à 1,5 équivalent d'au moins une base de Brönsted, par rapport à la quantité totale de composé(s) de la formule (III).

6. Procédé suivant au moins l'une des revendications précédentes 1 à 5, **caractérisé en ce qu'**on ajoute en dosant au récipient réactionnel en parallèle le ou les composés de la formule (III) dans au moins un solvant organique inerte L et le ou les composés de la formule (IV) dans une solution aqueuse-alcaline.

7. Procédé suivant au moins l'une des revendications précédentes 1 à 6, **caractérisé en ce qu'**on effectue la réaction à des températures de l'ordre de 20°C à 80°C.

8. Utilisation du procédé suivant la revendication 1, **caractérisée en ce qu'**on met en oeuvre un échangeur d'ions acide.

9. Utilisation de la substance synthétique hautement transparente suivant au moins l'une des revendications 1 à 8 comme lentille optique, de préférence comme lentille ophtalmique.

10. Lentille optique, en particulier ophtalmique, présentant une substance synthétique hautement transparente suivant au moins l'une des revendications 1 à 9.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DD 298645
- JP 5215995 A
- WO 0136506 A
- EP 0810210 A
- DE 4234251
- EP 271839 A


### In der Beschreibung aufgeführte Nicht-Patentliteratur


- Polymerization Processes. **H. G. ELIAS.** Makromoleküle. Ullmann's Encyclopedia of Industrial Chemistry, 1990, vol. 1 und 2, 5
- Lexikon der Physik. **WALTER GREULICH (HRSG.** Heidelberg. Spektrum, Akademischer Verlag, 1998, vol. 1
- Ullmann Encyklopädie der technischen Chemie. Anwendung physikalischer und physikalisch-chemischer Methoden im Laboratorium, Stichwort: Dielektrizitätskonstante. vol. 2/1, 455-479
- Handbook of Chemistry and Physics. Auflage. CRC Press, 1990, vol. 71, 8-44 846 9-9 912